# EUROPÄISCHE PATENTSCHRIFT

(11) **EP 4 018 219 B1**
(45) Veröffentlichungstag und Bekanntmachung des Hinweises auf die Patenterteilung: **05.07.2023**
(21) Anmeldenummer: 20751126.2
(22) Anmeldetag: 04.08.2020
(51) Int. Cl.: G01S 7/4863, G01S 7/4865, G01S 7/497, G01S 17/10

(54) **VERFAHREN ZUM BETREIBEN EINER OPTOELEKTRONISCHEN DETEKTIONSVORRICHTUNG UND OPTOELEKTRONISCHE DETEKTIONSVORRICHTUNG**
METHOD FOR OPERATING AN OPTOELECTRONIC DETECTION DEVICE, AND OPTOELECTRONIC DETECTION DEVICE
PROCÉDÉ DE FONCTIONNEMENT D'UN DISPOSITIF DE DÉTECTION OPTOÉLECTRONIQUE ET DISPOSITIF DE DÉTECTION OPTOÉLECTRONIQUE

(30) Priorität: 22.08.2019 DE 102019122566
(43) Veröffentlichungstag der Anmeldung: 29.06.2022
(73) Patentinhaber: Valeo Schalter und Sensoren GmbH, 74321 Bietigheim-Bissingen (DE)
(72) Erfinder: SCHENK, Jochen, 74321 Bietigheim-Bissingen (DE); KLEISER, Michael, 74321 Bietigheim-Bissingen (DE); NIES, Jürgen, 74321 Bietigheim-Bissingen (DE); SELBMANN, Frank, 74321 Bietigheim-Bissingen (DE)
(74) Vertreter: Pothmann, Karsten
(86) Internationale Anmeldenummer: PCT/EP2020/071853
(87) Internationale Veröffentlichungsnummer: WO 2021/032463

(56) Entgegenhaltungen:
- DE-A1-102017 127 922
- US-A1- 2019 086 540

## Beschreibung

### Technisches Gebiet

Die Erfindung betrifft ein Verfahren zum Betreiben einer optoelektronischen Detektionsvorrichtung zur Überwachung wenigstens eines Überwachungsbereichs mit optischen Überwachungssignalen, bei dem
- wenigstens ein Empfangsstartsignal an wenigstens eine optische Empfangseinrichtung übermittelt wird,
- mit der wenigstens einen Empfangseinrichtung auf das wenigstens eine Empfangsstartsignal hin ein Empfangsprozess gestartet und wenigstens ein Triggersignal erzeugt wird,
- auf wenigstens ein Triggersignal hin direkt oder indirekt mit wenigstens einer optischen Sendeeinrichtung wenigstens ein optisches Überwachungssignal erzeugt und in den wenigstens einen Überwachungsbereich gesendet wird,
- mit der wenigstens einen optischen Empfangseinrichtung Reflexions-Überwachungssignale empfangen werden, welche von Überwachungssignalen herrühren, die in dem wenigstens einen Überwachungsbereich reflektiert werden.

Ferner betrifft die Erfindung eine optoelektronische Detektionsvorrichtung zur Überwachung wenigstens eines Überwachungsbereichs mit optischen Überwachungssignalen, wobei die Detektionsvorrichtung aufweist
- wenigstens eine optische Sendeeinrichtung zur Erzeugung von optischen Überwachungssignalen,
- wenigstens eine optische Empfangseinrichtung zum Empfangen von optischen Reflexions-Überwachungssignalen, welche von optischen Überwachungssignalen herrühren, die in dem wenigstens einen Überwachungsbereich reflektiert werden,
- und wenigstens eine elektronische Steuer- und Auswerteeinrichtung, mit welcher die Detektionsvorrichtung gesteuert werden kann und mit der Detektionsvorrichtung erfasste Informationen über den Überwachungsbereich ausgewertet werden können,
- wobei die Steuer- und Auswerteeinrichtung zumindest signaltechnisch mit der wenigstens einen Empfangseinrichtung und der wenigstens einen Sendeeinrichtung verbunden ist,
- wobei die Steuer- und Auswerteeinrichtung wenigstens ein Startsignalerzeugungsmittel aufweist zur Erzeugung von Empfangsstartsignalen für wenigstens eine Empfangseinrichtung,
- wobei wenigstens eine Empfangseinrichtung wenigstens ein Triggersignalerzeugungsmittel aufweist zur Erzeugung von Triggersignalen,
- wobei die wenigstens eine Empfangseinrichtung wenigstens ein Umwandlungsmittel zur Umwandlung von optischen Reflexions-Überwachungssignalen in Signale, die mit der Steuer- und Auswerteeinrichtung verarbeitet werden können,
- und wobei die wenigstens eine optische Sendeeinrichtung wenigstens eine Lichtquelle aufweist, mit welcher optische Überwachungssignale erzeugt werden können.

### Stand der Technik

Aus der DE 10 2017 127 922 A1 ist eine optoelektronische Detektionseinrichtung mit mindestens einer optischen Sendeeinheit bekannt mit einem elektromagnetischen Pulserzeuger zum Aussenden elektromagnetischer Sendepulse, und mindestens einem optischen Empfänger zum Empfangen von reflektierten Sendepulsen, welche einer Auswertungseinrichtung ein in Abhängigkeit der reflektierten Sendepulse gebildetes Empfangssignalbereich bereitstellt, wobei der optische Empfänger eingerichtet ist, ein Triggersignal zur Steuerung des optischen Senders bereitzustellen. Bei einem Ausführungsbeispiel wird ein Startsignal von einem FPGA an den Empfänger ausgesendet und gleichzeitig zwei TDCs für ein Triggersignal und ein Feedbacksignal gestartet. Der Empfänger gibt das Triggersignal an die optische Sendeeinheit weiter. Die Zeit vom Startsignal bis zum Triggersignal wird über einen TDC im FPGA bestimmt und gibt die Triggerzeit an. Das Feedbacksignal wird etwas später am zweiten TDC am FPGA eintreffen und gemessen. Die Zeit vom Startsignal bis zum Feedbacksignal ergibt eine Feedbackzeit. Mittels der Messung der zeitlichen Differenz aus Triggerzeit und Feedbackzeit können temperatur- und alterungsbedingte Fehler kompensiert werden und die Messung der Distanzen verbessert werden.

Der Erfindung liegt die Aufgabe zugrunde, ein Verfahren und eine Detektionsvorrichtung der eingangs genannten Art zu gestalten, bei denen Bestimmungen von Entfernungen von im Überwachungsbereich etwa vorhandenen Objekten weiter verbessert werden können.

### Offenbarung der Erfindung

Diese Aufgabe wird erfindungsgemäß bei dem Verfahren dadurch gelöst, dass
- wenigstens ein erstes Empfangsstartsignal an wenigstens eine erste Empfangseinrichtung übermittelt wird und wenigstens ein zweites Empfangsstartsignal an wenigstens eine zweite Empfangseinrichtung übermittelt wird,
- mit der wenigstens einen ersten Empfangseinrichtung auf das wenigstens eine erste Empfangsstartsignal hin ein Empfangsprozess, der mit der wenigstens einen ersten Empfangseinrichtung durchgeführt wird, gestartet und wenigstens ein erstes Triggersignal erzeugt wird,
- mit der wenigstens einen zweiten Empfangseinrichtung auf das wenigstens eine zweite Empfangsstartsignal hin ein Empfangsprozess, der mit der wenigstens einen zweiten Empfangseinrichtung durchgeführt wird, gestartet wird und wenigstens ein zweites Triggersignal erzeugt wird,
- aus dem wenigstens einen ersten Triggersignal und dem wenigstens einen zweiten Triggersignal ein Sendertriggersignal ermittelt wird, welches zumindest bezüglich seiner Triggerfunktion dem Späteren der wenigstens zwei Triggersignale entspricht,
- auf das Sendertriggersignal hin mit wenigstens einer optischen Sendeeinrichtung wenigstens ein optisches Überwachungssignal erzeugt wird.

Erfindungsgemäß werden zwei Empfangseinrichtungen verwendet, welche getrennt voneinander ausgelesen werden können. Die Empfangseinrichtungen können räumlich getrennt voneinander angeordnet sein, sodass der Überwachungsbereich besser überwacht werden kann. Insbesondere kann so ein größerer Überwachungsbereich abgedeckt werden.

Vorteilhafterweise können sich die jeweiligen Einzelüberwachungsbereiche der wenigstens zwei Empfangseinrichtungen in einem Überlappbereich überlappen. So können Lücken im Überwachungsbereich vermieden werden.

Auf die Empfangsstartsignale hin werden jeweilige Empfangsprozesse gestartet, die mit den jeweiligen Empfangseinrichtungen durchgeführt werden. Die Empfangsprozesse können vorteilhafterweise Laufzeitmessungen umfassen, mit denen Laufzeiten vom Senden eines Überwachungssignals und dem Empfang eines entsprechenden Reflexion-Überwachungssignals aus dem Überwachungsbereich gemessen werden können. Aus den Laufzeiten kann die Entfernung eines etwaigen Objektes, an dem das jeweilige Überwachungssignal reflektiert wurde, relativ zu der Detektionsvorrichtung ermittelt werden. Zusätzlich können die Empfangsprozesse die Bestimmung von Richtungen und/oder Geschwindigkeiten von Objekten relativ zur Detektionsvorrichtung umfassen.

Insgesamt kann die Detektionsvorrichtung zur Ermittlung von Entfernungen, Richtungen und/oder Geschwindigkeiten von Objekten relativ zur Detektionsvorrichtung ausgestaltet sein und verwendet werden.

Um sicherzustellen, dass beim Senden eines Überwachungssignals in den Überwachungsbereich, zumindest im Überlappbereich, beide Empfangseinrichtungen empfangsbereit sind, wird das Triggersignal der Empfangseinrichtung deren Triggersignal später erzeugt wird, zur Realisierung des Sendertriggersignals verwendet, mit dem die Erzeugung des optischen Überwachungssignals gestartet wird. Das zeitlich frühere Triggersignal kann dabei verworfen werden.

Aus dem wenigstens einen ersten Triggersignal und dem wenigstens einen zweiten Triggersignal wird ein Sendertriggersignal ermittelt, welches zumindest bezüglich seiner Triggerfunktion dem Späteren der wenigstens zwei Triggersignale entspricht. Die Triggerfunktion im Sinne der Erfindung kann insbesondere bei einem digitalen Triggersignal durch ansteigende Flanken und/oder abfallende Flanken bewirkt werden.

Vorteilhafterweise kann wenigstens ein optisches Überwachungssignal auf eine ansteigende Flanke des Sendertriggersignals hin erzeugt werden. Die ansteigende Flanke des Sendertriggersignals entspricht dabei zumindest bezüglich des Zeitpunkts der ansteigenden Flanke des späteren der wenigstens zwei Triggersignale. Alternativ oder zusätzlich kann wenigstens ein optisches Überwachungssignal auf eine abfallende Flanke des Sendertriggersignals hin erzeugt werden. Die abfallende Flanke des Sendertriggersignals entspricht dabei zumindest bezüglich des Zeitpunkts der abfallenden Flanke des späteren der wenigstens zwei Triggersignale.

Die Bezeichnungen "erstes" oder "zweites" insbesondere bei den Empfangseinrichtungen, den Empfangsstartsignalen und den Triggersignalen oder dergleichen dienen, sofern nicht anders erwähnt, lediglich der einfacheren Unterscheidung und implizieren keine zeitliche oder sonstige Reihenfolge.

Vorteilhafterweise kann die wenigstens eine Detektionsvorrichtung nach einem Lichtlaufzeitverfahren, insbesondere einem Lichtimpulslaufzeitverfahren, arbeiten. Nach dem Lichtimpulslaufzeitverfahren arbeitende optoelektronische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit gemessen vom Aussenden eines Überwachungssignals, insbesondere eines Lichtpulses, mit wenigstens einer Sendeeinrichtung und dem Empfang eines Reflexions-Überwachungssignals, welches von dem Überwachungssignal herrührt, das insbesondere an einem Objekt in dem Überwachungsbereich reflektiert wurde, mit wenigstens einer Empfangseinrichtung. Aus der Laufzeit wird eine Entfernung zwischen der Detektionsvorrichtung und dem Objekt ermittelt, an dem das Überwachungssignal reflektiert wurde.

Vorteilhafterweise kann die elektrooptischen Detektionsvorrichtung als scannendes System ausgestaltet sein. Dabei kann mit optischen Überwachungssignalen ein Überwachungsbereich abgetastet, also abgescannt, werden. Dazu können die entsprechenden Überwachungssignale bezüglich ihrer Ausbreitungsrichtung über den Überwachungsbereich geschwenkt werden. Hierbei kann wenigstens Umlenkeinrichtung, insbesondere eine Scaneinrichtung, eine Umlenkspiegeleinrichtung oder dergleichen, zum Einsatz kommen.

Vorteilhafterweise kann die elektrooptischer Detektionsvorrichtung als laserbasiertes Entfernungsmesssystem ausgestaltet sein. Das laserbasierte Entfernungsmesssystem kann als Lichtquelle der wenigstens einer Sendeeinrichtung wenigstens einen Laser, insbesondere einen Diodenlaser, aufweisen. Mit dem wenigstens einen Laser können insbesondere gepulste Sendestrahlen als Überwachungssignale gesendet werden. Mit dem Laser können optische Überwachungssignale in für das menschliche Auge sichtbaren oder nicht sichtbaren Frequenzbereichen emittiert werden. Entsprechend kann wenigstens eine Empfangseinrichtung einen für die Frequenz des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor oder dergleichen, aufweisen. Die als laserbasiertes Entfernungsmesssystem ausgelegte elektrooptische Detektionsvorrichtung kann vorteilhafterweise ein Laserscanner sein. Mit einem Laserscanner kann ein Überwachungsbereich mit einem insbesondere gepulsten Laserstrahl abgetastet werden.

Die Erfindung kann bei einem Fahrzeug, insbesondere einem Kraftfahrzeug, eingesetzt werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb eingesetzt werden.

Die elektrooptische Detektionsvorrichtung kann vorteilhafterweise mit wenigstens einer insbesondere elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann das Fahrzeug autonom oder teilautonom betrieben werden.

Mit der elektrooptischen Detektionsvorrichtung können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, oder dergleichen, erfasst werden.

Bei einer vorteilhaften Ausgestaltung des Verfahrens können mit den Empfangsprozessen der Empfangseinrichtungen Laufzeitmessungen durchgeführt werden für wenigstens ein optisches Überwachungssignal und wenigstens ein entsprechendes Reflexions-Überwachungssignal, welches von dem wenigstens einen Überwachungssignal herrührt, das in dem Überwachungsbereich reflektiert wurde. Auf diese Weise kann eine Laufzeit der optischen Überwachungssignale zwischen dem Aussenden eines optischen Überwachungssignals in den Überwachungsbereich und dem Empfang des entsprechenden Reflexions-Überwachungssignals aus dem Überwachungsbereich mit der wenigstens einen Empfangseinrichtung ermittelt werden.

Zwischen dem Starten des Empfangsprozesses und der Erzeugung wenigstens eines Triggersignals mit wenigstens einer Empfangseinrichtung kann es zu einer insbesondere technisch bedingten Verzögerung kommen. Diese Verzögerungen können bei den wenigstens zwei Empfangseinrichtungen unterschiedlich sein. Unterschiedliche Verzögerungen beim Erzeugen der Triggersignale können aufgrund der Taktung, insbesondere der Synchronisation, von Signalen zwischen den Empfangseinrichtungen und einer Steuer- und Auswerteeinrichtung hervorgerufen werden. Da das jeweils zeitlich spätere Triggersignal zum Starten des wenigstens einen optischen Überwachungssignals mit der optischen Sendeeinrichtung verwendet wird, wird die Laufzeitmessung mit der wenigstens einen Empfangseinrichtung, von der das zeitlich frühere Triggersignal herrührt, zeitlich vor der Erzeugung des Überwachungssignals gestartet. Auf diese Weise wird mit der wenigstens einen Empfangseinrichtung mit dem früheren Triggersignal fälschlich eine zu lange Laufzeit ermittelt und infolgedessen eine zu große Entfernung gemessen. Dieser Messfehler kann bei dem erfindungsgemäßen Verfahren mit einer Entfernungskompensation korrigiert werden.

Bei einer weiteren vorteilhaften Ausgestaltung des Verfahrens können das wenigstens eine erste Empfangsstartsignal an die wenigstens eine erste Empfangseinrichtung und das wenigstens eine zweite Empfangsstartsignal an die wenigstens eine zweite Empfangseinrichtung gleichzeitig übermittelt werden. Auf diese Weise können der Empfangsprozess mit der wenigstens einen ersten Empfangseinrichtung und der Empfangsprozess mit der wenigstens einen zweiten Empfangseinrichtung gleichzeitig gestartet werden.

Vorteilhafterweise können das wenigstens eine erste Empfangsstartsignal und das wenigstens eine zweite Empfangsstartsignal identisch sein. Auf diese Weise ist die Gleichzeitigkeit gewährleistet. Ferner ist lediglich ein Startsignalerzeugungsmittel erforderlich, um die Empfangsstartsignale bereitzustellen.

Bei einer weiteren vorteilhaften Ausgestaltung des Verfahrens kann eine Laufzeitmessung, welche mit einem Empfangsprozess mit der wenigstens einen Empfangseinrichtung durchgeführt wird, von der das zeitlich frühere Triggersignal generiert wird, mittels wenigstens einer Verzögerungsgröße korrigiert werden, wobei die wenigstens eine Verzögerungsgröße eine zeitliche Verzögerung zwischen dem wenigstens einen ersten Triggersignal der wenigstens einen ersten Empfangseinrichtung und dem wenigstens einen zweiten Triggersignal der wenigstens einen zweiten Empfangseinrichtung charakterisiert. Auf diese Weise können Fehler in der Entfernungsmessung korrigiert werden. So kann die Entfernungsbestimmungen weiter verbessert werden.

Bei einer weiteren vorteilhaften Ausgestaltung des Verfahrens kann wenigstens eine Verzögerungsgröße ermittelt werden, welche eine zeitliche Verzögerung zwischen dem eine Triggerfunktion bewirkenden Zustand des wenigstens einen ersten Triggersignals und dem eine Triggerfunktion bewirkenden Zustand des wenigstens einen zweiten Triggersignals charakterisiert. Mithilfe der wenigstens einen Verzögerungsgröße können Messfehler korrigiert werden, welche von der zeitlichen Verzögerung zwischen dem wenigstens einen ersten Triggersignal und dem wenigstens einen zweiten Triggersignal herrühren.

Bei einer weiteren vorteilhaften Ausgestaltung des Verfahrens kann
- wenigstens ein Verzögerungserfassungsmittel bei der Übermittlung wenigstens eines Empfangsstartsignals gestartet und jeweils bei Erreichen eines eine Triggerfunktion des wenigstens einen ersten Triggersignals und eines eine Triggerfunktion bewirkenden Zustands des wenigstens einen zweiten Triggersignals gestoppt werden,
- aus einer Differenz einer Verzögerung für das wenigstens eine erste Triggersignal und einer Verzögerung für das wenigstens eine zweite Triggersignal kann wenigstens eine Verzögerungsgröße ermittelt werden, welche eine zeitliche Verzögerung zwischen dem wenigstens einen ersten Triggersignal und dem wenigstens einen zweiten Triggersignals charakterisiert.

Vorteilhafterweise kann wenigstens ein Verzögerungserfassungsmittel als Zähler realisiert sein. Mithilfe eines Zählers können Verzögerungsgrößen in Form von Zählwerten ermittelt werden. So können auch digitale Zählwerte ermittelt werden, welche insbesondere mit Logikmitteln verarbeitet werden können.

Bei einer weiteren vorteilhaften Ausgestaltung des Verfahrens kann aus wenigstens einem Ergebnis wenigstens eines Empfangsprozesses Entfernungsgröße, welche eine Entfernung wenigstens eines Objekts, an dem das wenigstens eine optische Überwachungssignal reflektiert wird, relativ zu der optischen Detektionsvorrichtung charakterisiert ermittelt werden. Auf diese Weise kann die Detektionsvorrichtung als Entfernungsmesssystem eingesetzt werden.

Vorteilhafterweise können zusätzlich aus wenigstens einem Ergebnis wenigstens eines Empfangsprozesses eine Richtung und/oder Geschwindigkeit wenigstens eines Objekts relativ zur Detektionsvorrichtung ermittelt werden. So können Objekte besser zugeordnet werden.

Ferner wird die Aufgabe erfindungsgemäß bei der Detektionsvorrichtung dadurch gelöst, dass
- die Detektionsvorrichtung wenigstens zwei Empfangseinrichtungen umfasst, welche jeweils ein Triggersignalerzeugungsmittel aufweisen zur Erzeugung eines jeweiligen Triggersignals,
- die Steuer- und Auswerteeinrichtung wenigstens ein Startsignalerzeugungsmittel aufweist zur Erzeugung von Empfangsstartsignalen für die Empfangseinrichtungen,
- die Steuer- und Auswerteeinrichtung wenigstens ein Logikmittel aufweist, mit welchem aus den Triggersignalen der wenigstens zwei Empfangseinrichtungen ein Sendertriggersignal ermittelt werden kann, welches zumindest bezüglich seiner Triggerfunktion dem Späteren der wenigstens zwei Triggersignale entspricht,
- wobei das wenigstens eine Logikmittel wenigstens eine Signalverbindung zu der wenigstens einen Sendeeinrichtung aufweist zur Übermittlung wenigstens des Sendertriggersignals zum Starten der Erzeugung wenigstens eines optischen Überwachungssignals.

Erfindungsgemäß sind wenigstens zwei Empfangseinrichtungen vorgesehen, welche getrennt voneinander jeweilige Reflexions-Überwachungssignale empfangen können. Die Empfangseinrichtungen weisen jeweils ein Signalerzeugungsmittel auf, mit welchem getrennt jeweilige Triggersignale erzeugt werden können. Die Steuer- und Auswerteeinrichtung weist wenigstens ein Logikmittel auf, mit welchem ein Sendertriggersignal erzeugt werden kann, dass funktional dem zeitlich späteren Triggersignal entspricht. Mit dem Sendertriggersignal kann die wenigstens eine Sendeeinrichtung angesteuert werden und so ein entsprechendes optisches Überwachungssignal erzeugt werden.

Vorteilhafterweise kann die erfindungsgemäße Detektionsvorrichtung ausgestaltet sein zur Durchführung des erfindungsgemäßen Verfahrens.

Vorteilhafterweise kann das wenigstens eine Umwandlungsmittel zur Umwandlung von optischen Überwachungssignalen in Signale, die mit der Steuer- und Auswerteeinrichtung verarbeitet werden können, ein optoelektronisches Bauteil, aufweisen.

Vorteilhafterweise kann das wenigstens eine Umwandlungsmittel einen für die Frequenz des ausgesendeten Überwachungssignals ausgelegten Detektor, insbesondere einen Punktsensor, Zeilensensor oder Flächensensor, im Besonderen eine (Lawinen)fotodiode, eine Photodiodenzeile, einen CCD-Sensor oder dergleichen, aufweisen oder daraus bestehen. Auf diese Weise können die optischen Reflexions-Überwachungssignale in elektrische Signale umgewandelt werden. Die elektrischen Signale können mit einer elektronischen Steuer- und Auswerteeinrichtung verarbeitet werden.

Vorteilhafterweise kann die Steuer- und Auswerteeinrichtung eine elektronische Steuer- und Auswerteeinrichtung sein. Auf diese Weise kann die Detektionsvorrichtung elektronisch betrieben werden.

Das wenigstens eine Startsignalerzeugungsmittel der Steuer- und Auswerteeinrichtung und die Triggersignalerzeugungsmittel der Empfangseinrichtungen können funktional kombiniert realisiert sein. Das wenigstens eine Startsignalerzeugungsmittel und/oder die Triggersignalerzeugungsmittel können auf software- und/oder hardwaretechnischem Wege realisiert sein. Das wenigstens eine Startsignalerzeugungsmittel und die Triggersignalerzeugungsmittel können gemeinsam in der Steuer- und Auswerteeinrichtung oder räumlich getrennt voneinander, insbesondere in unterschiedlichen Bauteilen, realisiert sein.

Bei einer vorteilhaften Ausführungsform kann wenigstens eine Empfangseinrichtung wenigstens ein Laufzeitmessmittel aufweisen. Mit dem wenigstens einen Laufzeitmessmittel kann die Laufzeit vom Erzeugen oder Senden von optischen Überwachungssignalen bis zum Empfang der entsprechenden Reflexions-Überwachungssignale ermittelt werden.

Bei einer weiteren vorteilhaften Ausführungsform kann die Detektionsvorrichtung wenigstens ein Entfernungskompensationsmittel aufweisen. Mit dem wenigstens einen Entfernungskompensationsmittel können Unterschiede in den Entfernungen, welche von den wenigstens zwei Empfangseinrichtungen ermittelt werden, kompensiert werden. Die Unterschiede in den gemessenen Entfernungen sind die Folge von unterschiedlichen Verzögerungen bei der Erzeugung der Triggersignale mit den Empfangseinrichtungen.

Bei einer weiteren vorteilhaften Ausführungsform kann die Detektionsvorrichtung wenigstens ein Verzögerungserfassungsmittel aufweisen, mit welchem eine Verzögerungsgröße ermittelt werden kann, die eine zeitliche Verzögerung zwischen den Triggersignalen der wenigstens zwei Empfangseinrichtungen charakterisiert.

Vorteilhafterweise kann wenigstens ein Verzögerungserfassungsmittel wenigstens einen Time-to-Digital-Converter (TDC) aufweisen oder daraus bestehen. Mit einem Time-to-Digital-Converter kann wenigstens eine digitale Verzögerungsgröße ermittelt werden, welche eine zeitliche Verzögerung zwischen dem wenigstens einen ersten Triggersignal und dem wenigstens einen zweiten Triggersignals charakterisiert.

Vorteilhafterweise kann mit dem wenigstens einen Verzögerungserfassungsmittel ein Zeitintervall zwischen dem jeweiligen Empfangsstartsignal und der Erzeugung des entsprechenden Triggersignals gemessen und in eine digitale Verzögerungsgröße umgewandelt werden. Die digitale Verzögerungsgröße kann einem entsprechenden Entfernungskompensationsmittel zugeführt werden, mit dem die entsprechenden Messfehler in der Entfernungsmessung der Empfangseinrichtung, von welcher das zeitlich frühere Triggersignal herrührt, korrigiert werden kann.

Vorteilhafterweise kann die Steuer- und Auswerteeinrichtung wenigstens ein Entfernungskompensationsmittel und/oder wenigstens ein Verzögerungserfassungsmittel aufweisen. Das wenigstens eine Entfernungskompensationsmittel und/oder das wenigstens eine Verzögerungserfassungsmittel kann mit der Steuer- und Auswerteeinrichtung realisiert sein. Auf diese Weise kann ein Bauteilaufwand insgesamt verringert werden

Bei einer weiteren vorteilhaften Ausführungsform kann zwischen einem Ausgang wenigstens einer Empfangseinrichtung für das entsprechende Triggersignal und einem Eingang eines Entfernungskompensationsmittels wenigstens ein Verzögerungserfassungsmittel angeordnet sein. Auf diese Weise kann mit der Verzögerungserfassungsmittel eine die Verzögerung charakterisieren Verzögerungsgröße ermittelt und direkt dem Entfernungskompensationsmittel zugeführt werden.

Bei einer weiteren vorteilhaften Ausführungsform kann wenigstens ein Logikmittel wenigstens ein UND-Gatter, wenigstens eine Laufzeitleitung und/oder wenigstens einen Inverter aufweisen. Auf diese Weise kann nach Eingabe der Triggersignale der wenigstens zwei Empfangseinrichtungen das Sendertriggersignal ermittelt werden, welches zumindest bezüglich seiner Triggerfunktion dem Späteren der wenigstens zwei Triggersignale entspricht.

Laufzeitleitungen können im englischsprachigen auch als "Delay-line" bezeichnet werden.

Bei einer weiteren vorteilhaften Ausführungsform können wenigstens Teile der wenigstens einen Steuer- und Auswerteeinrichtung, der Signalerzeugungsmittel, der Entfernungskompensationsmittel, der Verzögerungserfassungsmittel, und/oder der Logikmittel mit wenigstens einem programmierbaren Baustein realisiert sein. Auf diese Weise können die entsprechenden Mittel flexibler realisiert und angepasst werden.

Vorteilhafterweise kann der der wenigstens eine programmierbare Baustein wenigstens ein Field Programmable Gate Array (FPGA) aufweisen oder daraus bestehen. FPGAs können durch entsprechende Programmierung auch im Feld angepasst werden.

Im Übrigen gelten die im Zusammenhang mit dem erfindungsgemäßen Verfahren und der erfindungsgemäßen Detektionsvorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Fahrzeug mit einer optischen Detektionsvorrichtung und einem Fahrerassistenzsystem in der Vorderansicht;
- Figur 2: eine Funktionsdarstellung des Fahrzeugs aus der Figur 1;
- Figur 3: eine Funktionsdarstellung der optischen Detektionsvorrichtung aus der Figur 1;
- Figur 4: zeitliche Verläufe von Steuersignalen der optischen Detektionsvorrichtung;
- Figur 5: eine Funktionsdarstellung eines Logikmittels, welches Teil einer Steuer- und Auswerteeinrichtung der optischen Detektionsvorrichtung aus den Figur 1 bis 3 ist;
- Figur 6: zeitliche Verläufe von Signalen innerhalb des Logikmittels aus der Figur 5.

In den Figuren sind gleiche Bauteile mit gleichen Bezugszeichen versehen.

### Ausführungsform(en) der Erfindung

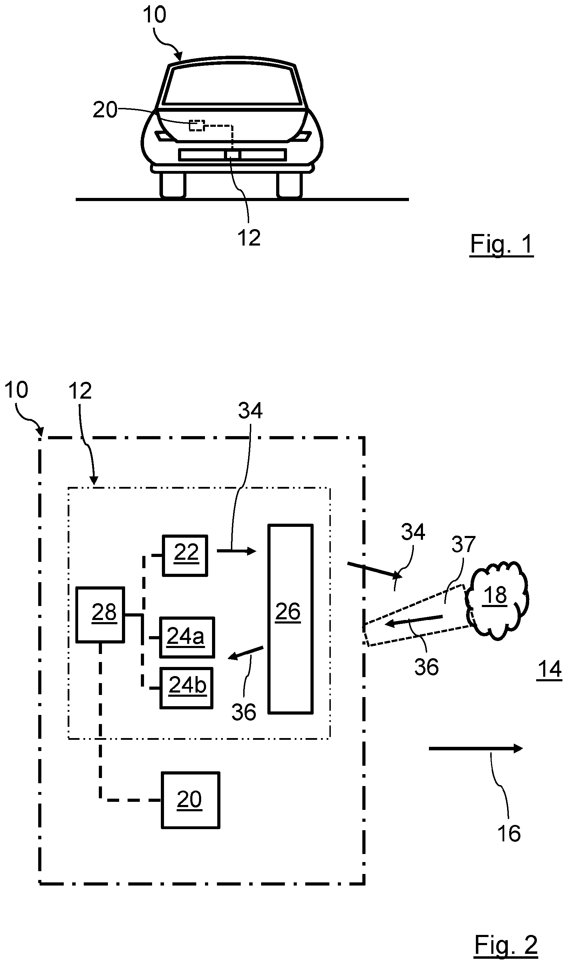

In der Figur 1 ist ein Fahrzeug 10 beispielhaft in Form eines Personenkraftwagens in der Vorderansicht gezeigt. In der Figur 2 ist das Fahrzeug 10 als Funktionsdarstellung dargestellt.

Das Fahrzeug 10 weist eine optische Detektionsvorrichtung 12 beispielhaft in Form eines Laserscanners auf. Die Detektionsvorrichtung 12 befindet sich beispielhaft in der vorderen Stoßstange des Fahrzeugs 10 und ist in einen Überwachungsbereich 14 beispielhaft in Fahrtrichtung 16 vor dem Fahrzeug 10 gerichtet. Die Detektionsvorrichtung 12 kann auch an anderer Stelle des Fahrzeugs 10 auch anders ausgerichtet angeordnet sein. Es können auch mehrere Detektionsvorrichtungen 12 vorgesehen sein. Die Detektionsvorrichtung 12 dient zur Überwachung des Überwachungsbereichs 14 auf Objekte 18 hin.

Mit der Detektionsvorrichtung 12 können stehende oder bewegte Objekte 18, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, oder dergleichen, erfasst werden. Mit der Detektionsvorrichtung 12 können zumindest Entfernungen, aber auch Richtungen und/oder Geschwindigkeiten von Objekten 18 relativ zum Fahrzeug 10 ermittelt werden.

Ferner verfügt das Fahrzeug 10 über ein Fahrerassistenzsystem 20. Mit dem Fahrerassistenzsystem 20 kann das Fahrzeug 10 autonom oder teilautonom betrieben werden. Die Detektionsvorrichtung 12 ist funktional mit dem Fahrerassistenzsystem 20 verbunden. Über die Verbindung können Informationen, die mit der Detektionsvorrichtung 12 aus dem Überwachungsbereich 14, beispielsweise über etwaige Objekte 18, erfasst werden, an das Fahrerassistenzsystem 20 übermittelt werden.

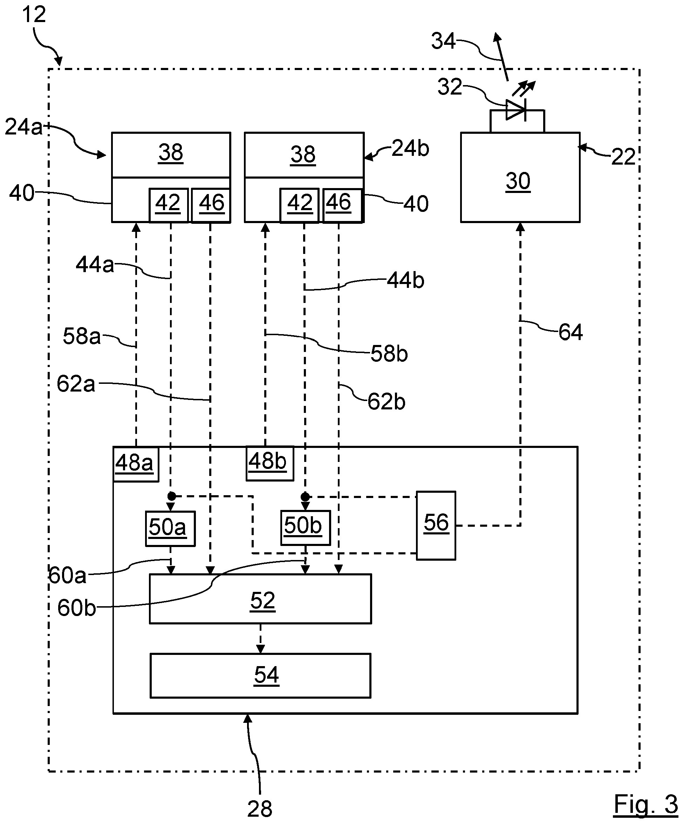

Die Detektionsvorrichtung 12 ist als Funktionsdarstellung auch in der Figur 3 gezeigt. Die Detektionsvorrichtung 12 umfasst beispielhaft eine Sendeeinrichtung 22, zwei Empfangseinrichtungen 24a und 24b, eine Lichtsignalumlenkeinrichtung 26 und eine Steuer- und Auswerteeinrichtung 28.

Die Sendeeinrichtung 22 verfügt über eine Sendeelektronik 30 und eine Lichtquelle 32. Die Lichtquelle 32 ist beispielhaft als Laserdiode realisiert. Die Sendeeinrichtung 22 ist funktional, beispielsweise zur Steuerung und Stromversorgung, mit der Steuer- und Auswerteeinrichtung 28 verbunden. Mit der Sendeeinrichtung 22, respektive der Lichtquelle 32, können optische Überwachungssignale 34, beispielsweise in Form von Laserpulsen, erzeugt werden.

Die Sendeeinrichtung 22 kann optional eine nicht gezeigte Senderoptik aufweisen, mit der die optischen Überwachungssignale 34 beispielsweise in einer Raumrichtung quer zur Ausbreitungsrichtung der Überwachungssignale 34 aufgeweitet werden können. Die Sendeeinrichtung 22 ist auf die Lichtsignalumlenkeinrichtung 26 gerichtet. Die Überwachungssignale 34 werden mit der Sendeeinrichtung 22 zur Lichtsignalumlenkeinrichtung 26 gesendet.

Die Lichtsignalumlenkeinrichtung 26 kann beispielsweise einen angetriebenen Umlenkspiegel, beispielsweise einen Mikroschwingspiegel oder MEMS-Spiegel, aufweisen. Mit der Lichtsignalumlenkeinrichtung 26 werden die optischen Überwachungssignale 34 in den Überwachungsbereich 14 gelenkt. Dabei können die Richtungen der Überwachungssignale 34 beispielsweise durch schwenken des Umlenkspiegels verändert werden. Der Überwachungsbereich 14 kann so mit den optischen Überwachungssignalen 34 abgetastet werden.

Falls die optischen Überwachungssignale 34 im Überwachungsbereich 14 auf ein Objekt 18 treffen, werden sie reflektiert und zurückgesendet. Die reflektierten Überwachungssignale 34 werden der der einfacheren Unterscheidbarkeit wegen als Reflexions-Überwachungssignale 36 bezeichnet.

Die Reflexions-Überwachungssignale 36, welche auf die Lichtsignalumlenkeinrichtung 26 treffen, werden mit dieser zu den Empfangseinrichtungen 24a und 24b umgelenkt. Der Sichtbereich der Empfangseinrichtung 24a und der Sichtbereich der Empfangseinrichtung 24b überlappen sich im Überwachungsbereich 14 in einem Überlappbereich 37, welche in der Figur 2 mit einem gestrichenen Trapez angedeutet ist. Reflexions-Überwachungssignale 36 aus dem Überlappbereich 37 werden mit beiden Empfangseinrichtungen 24a und 24b empfangen.

Die Empfangseinrichtungen 24a und 24b sind beispielhaft funktional identisch ausgestaltet. Jede der Empfangseinrichtungen 24a und 24b umfasst ein optoelektronisches Empfangsbauteil 38, beispielhaft einen optischen Detektor, beispielsweise einen Punktsensor, Zeilensensor oder Flächensensor, im Besonderen eine (Lawinen-)photodiode, eine Photodiodenzeile, einen CCD-Sensor oder dergleichen. Mit dem optoelektronischen Empfangsbauteil 38 können die optischen Reflexions-Überwachungssignale 36 in entsprechende elektrische Überwachungssignale umgewandelt werden.

Ferner weist jede Empfangseinrichtung 24a und 24b eine Empfangselektronik 40 auf.

Die Empfangselektroniken 40 sind jeweils signaltechnisch mit der Steuer- und Auswerteeinrichtung 28 verbunden. Mit der Steuer- und Auswerteeinrichtung 28 können beispielsweise elektrische Signale an die Empfangseinrichtungen 24a und 24b übermittelt werden und umgekehrt. Ferner können die elektrischen Überwachungssignale oder daraus resultierende Objektinformationen, wie beispielsweise Entfernungsgrößen 62a und 62a, von den Empfangseinrichtungen 24a und 24b an die Steuer- und Auswerteeinrichtung 28 übertragen werden.

Außerdem umfasst jede Empfangselektronik 40 ein Triggersignalerzeugungsmittel 42 und ein Laufzeitmittel 46.

Mit dem Triggersignalerzeugungsmittel 42 der Empfangseinrichtung 24a können Triggersignale 44a erzeugt werden. Mit dem Triggersignalerzeugungsmittel 42 der Empfangseinrichtung 24b können Triggersignale 44b erzeugt werden.

Mit den Laufzeitmitteln 46 können die jeweiligen Laufzeiten vom Aussenden der Überwachungssignale 34 bis zum Empfang der Reflexions-Überwachungssignale 36 mit den jeweiligen Empfangseinrichtungen 24a und 24b ermittelt und aus den Laufzeiten entsprechende Entfernungsgrößen 62a und 62b die ermittelt werden. Die Entfernungsgrö-ße 62a charakterisiert die mit der Empfangseinrichtung 24a ermittelte Entfernung des Objekts 18. Die Entfernungsgröße 62b charakterisiert die mit der Empfangseinrichtung 24b ermittelte Entfernung des Objekts 18. In der Regel werden mit den Empfangseinrichtungen 24a und 24b, wie weiter unten näher erläutert, unterschiedlich große Entfernungsgröße 62a und 62b ermittelt.

Die Empfangselektroniken 40 und die Steuer- und Auswerteeinrichtung 28 können auf software- und/oder hardwaretechnischem Wege realisiert sein.

Die Steuer- und Auswerteeinrichtung 28 kann beispielsweise als sogenanntes Field Programmable Gate Array (FPGA) ausgestaltet sein. Die Steuer- und Auswerteeinrichtung 28 umfasst beispielhaft zwei Startsignalerzeugungsmittel 48, zwei Verzögerungserfassungsmittel 50a und 50b, ein Entfernungskompensationsmittel 52, ein Speichermittel 54 und ein Logikmittel 56.

Mit dem Startsignalerzeugungsmittel 48a kann ein Empfangsstartsignal 58a erzeugt und an die Empfangseinrichtung 24a übermittelt werden. Entsprechend kann mit dem Startsignalerzeugungsmittel 48b ein Empfangsstartsignale 58b erzeugt und an die Empfangseinrichtung 24b übermittelt werden.

Mit dem Verzögerungsmittel 50a der Empfangseinrichtung 24a kann eine digitale Verzögerungsgröße realisiert werden, welche einer zeitlichen Verzögerung 60a zwischen dem Empfangsstartsignal 58a und dem entsprechenden Triggersignal 44a charakterisiert. Mit dem Verzögerungsmittel 50b der Empfangseinrichtung 24b kann eine digitale Verzögerungsgröße realisiert werden, welche einer zeitlichen Verzögerung 60b zwischen dem Empfangsstartsignal 58b und dem entsprechenden Triggersignal 44b charakterisiert. Die zeitlichen Verzögerungen 60a und 60b, respektive die entsprechenden Verzögerungsgrößen, können dem Entfernungskompensationsmittel 52 zugeführt werden. Die Verzögerungsmitteln 50a und 50b können beispielsweise als Verzögerungszähler realisiert sein..

Mit dem Entfernungskompensationsmittel 52 kann mithilfe der beiden Entfernungsgrö-ßen 62a und 62b und der beiden zeitlichen Verzögerungen 60a und 60b eine Korrektur der ermittelten Entfernungen, beispielhaft einer der ermittelten Entfernungsgrößen 62a oder 62b, durchgeführt werden. Die korrigierten Entfernungen, respektive die gegebenenfalls korrigierten Entfernungsgrößen 62a oder 62b, können in dem Speichermittel 54 gespeichert werden, von wo aus die Daten bei Bedarf abgerufen werden können. Das Speichermittel 54 kann beispielsweise als RAM realisiert sein.

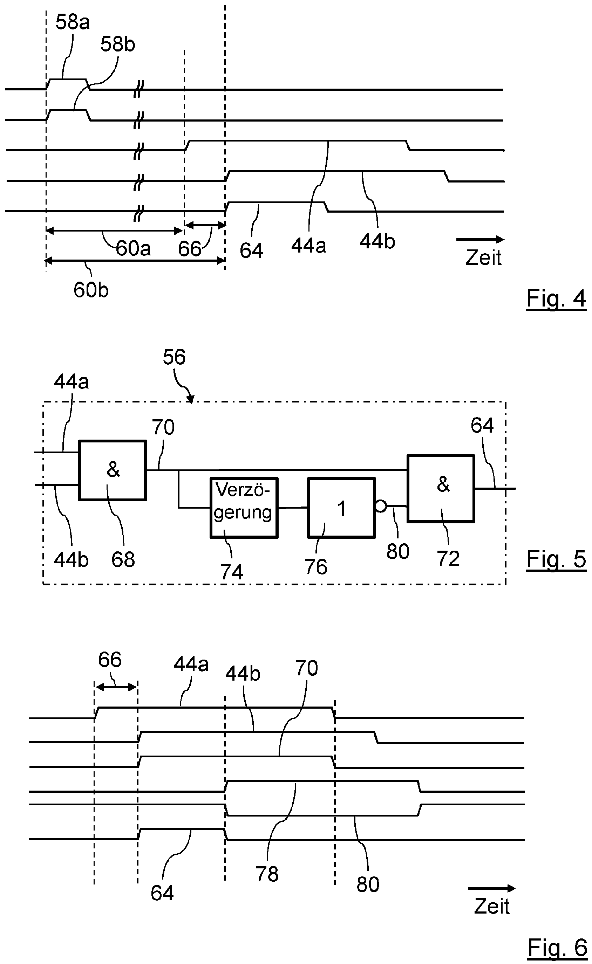

Das Logikmittel 56 ist im Detail in der Figur 5 gezeigt. Mit dem Logikmittel 56 kann aus dem zeitlich Späteren der beiden Triggersignalen 44a und 44b ein Sendertriggersignal 64 ermittelt werden. Das Sendertriggersignal 64 kann an die Sendeeinrichtung 22, respektive die Sendeelektronik 30, übermittelt werden. Auf das Sendertriggersignal 64 wird mit der Lichtquelle 32 ein optisches Überwachungssignal 34 erzeugt.

In der Figur 4 sind die Zeitverläufe der Empfangsstartsignale 58a und 58b der Triggersignale 44a und 44b und des Sendertriggersignals 64 gezeigt. Die Darstellung ist nicht maßstäblich. Die Empfangsstartsignale 58a und 58b, die Triggersignale 44a und 44b und das Sendertriggersignal 64 sind beispielhaft digitale Signale. Der Beginn der Empfangsstartsignale 58a und 58b, der Triggersignale 44a und 44b und des Sendertriggersignals 64 wird mit einer jeweiligen ansteigenden Flanke und deren Ende mit einer jeweiligen abfallenden Flanke realisiert.

Bei dem Verfahren zum Betreiben der Detektionsvorrichtung 12 wird zunächst die Stellung der Lichtsignalumlenkeinrichtung 26 ermittelt und damit die Richtung, in der der Überwachungsbereich 14 mit der Detektionsvorrichtung 12 abgetastet wird.

Sobald die Lichtsignalumlenkeinrichtung 26 in den Überlappbereich 37 der beiden Empfangseinrichtungen 24a und 24b gerichtet ist, wird ein entsprechendes Signal an die Steuer- und Auswerteeinrichtung 28 übermittelt.

Auf dieses Signal hin werden mit den Startsignalerzeugungsmitteln 48a und 48b der Steuer- und Auswerteeinrichtung 28 die jeweiligen Empfangsstartsignale 58a und 58b generiert und an die Empfangseinrichtungen 24a und 24b übermittelt. Die Empfangsstartsignale 58a und 58b werden idealerweise gleichzeitig übermittelt. Statt der beispielhaft zwei Startsignalerzeugungsmittel 48a und 48b kann auch ein einziges Startsignalerzeugungsmittel vorgesehen sein, welches mit beiden Empfangseinrichtungen verbunden sein kann.

Auf das Empfangsstartsignal 58a wird in der Empfangseinrichtung 24a ein Empfangsprozess gestartet, welcher eine Laufzeitmessung mithilfe des Laufzeitmittels 46 umfasst. Außerdem wird mit dem Triggersignalerzeugungsmittel 42 der Empfangseinrichtung 24a mit einer Verzögerung 60a das jeweilige Triggersignal 44a erzeugt.

Auf das Empfangsstartsignal 58b wird in der Empfangseinrichtung 24b ein Empfangsprozess gestartet, welcher eine Laufzeitmessung mithilfe des dortigen Laufzeitmittels 46 umfasst. Außerdem wird mit dem Triggersignalerzeugungsmittel 42 der Empfangseinrichtung 24b mit einer Verzögerung 60b das jeweilige Triggersignal 44b erzeugt.

Die Verzögerung 60a der Empfangseinrichtung 24a und die Verzögerung 60b der Empfangseinrichtung 24b unterscheiden sich um einen Differenz 66. Die Unterschiede in den Verzögerungen 60a und 60b kommen bei dem beschriebenen Ausführungsbeispiel daher, dass die Takte zwischen der Steuer- und Auswerteeinrichtung 28, der Empfangseinrichtung 24a und der Empfangseinrichtung 24b nicht synchronisiert sind. Eine erwartete Differenz 66 zwischen den Verzögerungszeiten 60a und 60b beträgt beispielhaft wenige Nanosekunden. Die Differenz 66 wird, wie weiter unten erläutert, mithilfe der Verzögerungserfassungsmittel 50a und 50b ermittelt. Die Takte der Verzögerungserfassungsmittel 50a und 50b sind um ein Vielfaches höher als die Takte der Empfangseinrichtungen 24a und 24b.

Das Triggersignal 44a der Empfangseinrichtung 24a wird dem Verzögerungserfassungsmittel 50a übermittelt. Das Triggersignal 44b der Empfangseinrichtung 24b wird dem Verzögerungserfassungsmittel 50b übermittelt. Beide Triggersignale 44a und 44b werden außerdem dem Logikmittel 56 zugeführt.

Das Verzögerungserfassungsmittel 50a wird mit dem Empfangsstartsignal 58a gestartet und beim Eintreffen des Triggersignals 44a gestoppt. Mit dem Verzögerungserfassungsmittel 50a wird die zeitliche Verzögerung 60a bestimmt. Entsprechend wird das Verzögerungserfassungsmittel 50b wird mit dem Empfangsstartsignal 58b gestartet und beim Eintreffen des Triggersignals 44b gestoppt. Mit dem Verzögerungserfassungsmittel 50b wird die zeitliche Verzögerung 60b bestimmt.

Das Logikmittel 56 ist im Detail in Figur 5 gezeigt. Das Logikmittel 56 verfügt beispielhaft über ein erstes UND-Gatter 68, an dessen Eingänge die Triggersignale 44a und 44b angelegt werden. Ein erstes UND-Gatter-Ausgangssignal 70 am Ausgang des ersten UND-Gatters 68 wird an einen Eingang eines zweiten UND-Gatters 72 angelegt. Außerdem wird das erste UND-Gatter-Ausgangssignal 70 an einen Eingang einer Laufzeitleitung 74 angelegt. An die Laufzeitleitung 74 schließt sich ein Inverter 76 ein.

Das invertierte Laufzeitleitungsausgangssignal 80 am Ausgang des Inverters 76 wird an den zweiten Eingang des zweiten UND-Gatters 72 angelegt. Am Ausgang des zweiten UND-Gatters 72 liegt das Sendertriggersignal 64 an. Die ansteigende Flanke des Sendertriggersignals 64 entspricht der ansteigenden Flanke des zeitlich späteren, beispielhaft des Triggersignals 44b der Empfangseinrichtung 24b. Die ansteigende Flanke des Sendertriggersignals 64 erfüllt bei dem beschriebenen Beispiel die Triggerfunktion zum Erzeugen eines Überwachungssignals 34 mit der Sendeeinrichtung 22. Dies bedeutet, dass die Lichtquelle 32 mit der ansteigenden Flanke des Sendertriggersignals 64 zum Erzeugen eines Überwachungssignals 34 getriggert wird.

Der zeitliche Verlauf der Triggersignale 44a und 44b, des UND-Gatter-Ausgangssignals 70, eines Laufzeitleitungsausgangssignals 78, des invertierten Laufzeitleitungsausgangssignals 80 und des Sendertriggersignals 64 sind in der Figur 6 nicht maßstäblich gezeigt. Das Laufzeitleitungsausgangssignal 78 liegt am Ausgang der Laufzeitleitung 74 an.

Beispielhaft kann die Differenz 66 der Verzögerungen 60a und 60b zwischen den beiden Triggersignale 44a und 44b kürzer als 5 ns sein. Die Dauer der Triggersignale 44a und 44b, nämlich der zeitliche Abstand zwischen der jeweiligen ansteigenden Flanke und der jeweiligen abfallenden Flanke, sind in der Größenordnung von etwa 80 ns. Die Triggersignale 44a und 44b sind deutlich größer als die Differenz 66 der Verzögerung 60a und 60b. Auf diese Weise kann es nicht zu Doppelpulsen am Ausgang des zweiten UND-Gatters 72 kommen. Mit der Laufzeitleitung 74 kann an die gewünschte Länge des Sendertriggersignals 64 angepasst werden.

Insgesamt wird das zeitlich spätere Triggersignal, in dem gezeigten Beispiel das Triggersignal 44b, nicht in die Zeitbasis der Steuer- und Auswerteeinrichtung 28 überführt, sondern über die nicht getakteten Elemente des Logikmittels 56 in Form des Sendertriggersignals 64 an die Sendeeinrichtung 22 weitergeleitet.

Auf das Sendertriggersignal 64 hin wird mit der Sendeeinrichtung 22 ein optisches Überwachungssignal 34 erzeugt. Mithilfe der Lichtsignalumlenkeinrichtung 26, welche, wie eingangs erwähnt, momentan in den Überlappungsbereich 37 gerichtet ist, wird das optische Überwachungssignal 34 in den Überwachungsbereich 14 gesendet.

Das an dem Objekt 18 im Überlappungsbereich 37 reflektierte Reflexions-Überwachungssignal 36 wird mit der Lichtsignalumlenkeinrichtung 26 auf beide Empfangseinrichtung 24a und 24b gelenkt. Mit dem Empfang der reflektierten Reflexions-Überwachungssignale 36 werden die jeweiligen Laufzeiten ermittelt.

Da die Empfangseinrichtung 24a, welche bei dem beschriebenen Beispiel das zeitlich frühere Triggersignal 44a erzeugt, mit der Laufzeitmessung beginnt, bevor mit der Lichtquelle 32 das entsprechende Reflexions-Überwachungssignal 36 erzeugt wurde, wird fälschlicherweise eine zu lange Laufzeit und damit eine zu große Entfernung gemessen. Der Unterschied zwischen der gemessenen Laufzeit und der korrekten Laufzeit entspricht der Differenz 66 zwischen den beiden Triggersignalen 44a und 44b.

Mit dem Entfernungskompensationsmittel 52 wird aus den zeitlichen Verzögerungen 60a und 60b und den Entfernungsgrößen 62a und 62b, welche von den beiden Empfangseinrichtungen 24a und 24b übermittelt werden, diejenige Entfernungsgröße korrigiert, welche von der Empfangseinrichtung ermittelt wird, welche das zeitlich frühere Triggersignal zur Verfügung stellt. Bei dem beschriebenen Ausführungsbeispiel stellt die Empfangseinrichtung 24a das zeitlich frühere Triggersignal 58a zur Verfügung, sodass die entsprechende Entfernungsgröße 62a korrigiert wird. Die andere Entfernungsgröße 62b wird als richtig angenommen und wird nicht korrigiert.

Die Entfernungsgröße 62b und die korrigierte Entfernungsgröße 62a werden an das Speichermittel 54 übermittelt. In dem Speichermittel 54 stehen die entsprechenden Entfernungsinformationen, nämlich die Entfernungsgröße 62b und die korrigierte Entfernungsgröße 62a, auf Abruf beispielsweise durch das Fahrerassistenzsystem 20 zur Verfügung.

## Patentansprüche

1. Verfahren zum Betreiben einer optoelektronischen Detektionsvorrichtung (12) zur Überwachung wenigstens eines Überwachungsbereichs (14) mit optischen Überwachungssignalen (34), bei dem
- wenigstens ein Empfangsstartsignal (58a, 58b) an wenigstens eine optische Empfangseinrichtung (24a, 24b) übermittelt wird,
- mit der wenigstens einen Empfangseinrichtung (24a, 24b) auf das wenigstens eine Empfangsstartsignal (58a, 58b) hin ein Empfangsprozess gestartet und wenigstens ein Triggersignal (44a, 44b) erzeugt wird,
- auf wenigstens ein Triggersignal (44a, 44b) hin direkt oder indirekt mit wenigstens einer optischen Sendeeinrichtung (22) wenigstens ein optisches Überwachungssignal (34) erzeugt und in den wenigstens einen Überwachungsbereich (14) gesendet wird,
- mit der wenigstens einen optischen Empfangseinrichtung (24a, 24b) Reflexions-Überwachungssignale (36) empfangen werden, welche von Überwachungssignalen (34) herrühren, die in dem wenigstens einen Überwachungsbereich (14) reflektiert werden,
**dadurch gekennzeichnet, dass**
- wenigstens ein erstes Empfangsstartsignal (58a) an wenigstens eine erste Empfangseinrichtung (24a) übermittelt wird und wenigstens ein zweites Empfangsstartsignal (58b) an wenigstens eine zweite Empfangseinrichtung (24b) übermittelt wird,
- mit der wenigstens einen ersten Empfangseinrichtung (24a) auf das wenigstens eine erste Empfangsstartsignal (58a) hin ein Empfangsprozess, der mit der wenigstens einen ersten Empfangseinrichtung (24a) durchgeführt wird, gestartet und wenigstens ein erstes Triggersignal (44a) erzeugt wird,
- mit der wenigstens einen zweiten Empfangseinrichtung (24b) auf das wenigstens eine zweite Empfangsstartsignal (58b) hin ein Empfangsprozess, der mit der wenigstens einen zweiten Empfangseinrichtung (24b) durchgeführt wird, gestartet wird und wenigstens ein zweites Triggersignal (44b) erzeugt wird,
- aus dem wenigstens einen ersten Triggersignal (44a) und dem wenigstens einen zweiten Triggersignal (44b) ein Sendertriggersignal (64) ermittelt wird, welches zumindest bezüglich seiner Triggerfunktion dem Späteren der wenigstens zwei Triggersignale (44a, 44b) entspricht,
- auf das Sendertriggersignal (64) hin mit wenigstens einer optischen Sendeeinrichtung (22) wenigstens ein optisches Überwachungssignal (34) erzeugt wird.

2. Verfahren nach Anspruch 1, **dadurch gekennzeichnet, dass** mit den Empfangsprozessen der Empfangseinrichtungen (24a, 24b) Laufzeitmessungen durchgeführt werden für wenigstens ein optisches Überwachungssignal (34) und wenigstens ein entsprechendes Reflexions-Überwachungssignal (36), welches von dem wenigstens einen Überwachungssignal (34) herrührt, das in dem Überwachungsbereich (14) reflektiert wurde.

3. Verfahren nach Anspruch 1 oder 2, **dadurch gekennzeichnet, dass** das wenigstens eine erste Empfangsstartsignal (58a) an die wenigstens eine erste Empfangseinrichtung (24a) und das wenigstens eine zweite Empfangsstartsignal (58a) an die wenigstens eine zweite Empfangseinrichtung (24a) gleichzeitig übermittelt werden.

4. Verfahren nach einem der vorigen Ansprüche, **dadurch gekennzeichnet, dass** eine Laufzeitmessung, welche mit einem Empfangsprozess mit der wenigstens einen Empfangseinrichtung (24a) durchgeführt wird, von der das zeitlich frühere Triggersignal (44a) generiert wird, mittels wenigstens einer Verzögerungsgröße (66) korrigiert wird, wobei die wenigstens eine Verzögerungsgröße (66) eine zeitliche Verzögerung zwischen dem wenigstens einen ersten Triggersignal (44a) der wenigstens einen ersten Empfangseinrichtung (24a) und dem wenigstens einen zweiten Triggersignal (44b) der wenigstens einen zweiten Empfangseinrichtung (24b) charakterisiert.

5. Verfahren nach einem der vorigen Ansprüche, **dadurch gekennzeichnet, dass** wenigstens eine Verzögerungsgröße (66) ermittelt wird, welche eine zeitliche Verzögerung zwischen dem eine Triggerfunktion bewirkenden Zustand des wenigstens einen ersten Triggersignals (44a) und dem eine Triggerfunktion bewirkenden Zustand des wenigstens einen zweiten Triggersignals (44b) charakterisiert.

6. Verfahren nach einem der vorigen Ansprüche, **dadurch gekennzeichnet, dass**
- wenigstens ein Verzögerungserfassungsmittel (50a, 50b) bei der Übermittlung wenigstens eines Empfangsstartsignals (58a, 58b) gestartet und jeweils bei Erreichen eines eine Triggerfunktion des wenigstens einen ersten Triggersignals (44a) und eines eine Triggerfunktion bewirkenden Zustands des wenigstens einen zweiten Triggersignals (44b) gestoppt wird,
- aus einer Differenz einer Verzögerung (60a) für das wenigstens eine erste Triggersignal (44a) und einer Verzögerung (60b) für das wenigstens eine zweite Triggersignal (44b) wenigstens eine Verzögerungsgröße (66) ermittelt wird, welche eine zeitliche Verzögerung zwischen dem wenigstens einen ersten Triggersignal (44a) und dem wenigstens einen zweiten Triggersignals (44b) charakterisiert.

7. Verfahren nach einem der vorigen Ansprüche, **dadurch gekennzeichnet, dass** aus wenigstens einem Ergebnis wenigstens eines Empfangsprozesses eine Entfernungsgröße (62a, 62b), welche eine Entfernung wenigstens eines Objekts (18), an dem das wenigstens eine optische Überwachungssignal (34) reflektiert wird, relativ zu der optischen Detektionsvorrichtung (12) charakterisiert, ermittelt wird.

8. Optoelektronische Detektionsvorrichtung (12) zur Überwachung wenigstens eines Überwachungsbereichs (14) mit optischen Überwachungssignalen (34), wobei die Detektionsvorrichtung (12) aufweist
- wenigstens eine optische Sendeeinrichtung (22) zur Erzeugung von optischen Überwachungssignalen (34),
- wenigstens eine optische Empfangseinrichtung (24a, 24b) zum Empfangen von optischen Reflexions-Überwachungssignalen (36), welche von optischen Überwachungssignalen (34) herrühren, die in dem wenigstens einen Überwachungsbereich (14) reflektiert werden,
- und wenigstens eine elektronische Steuer- und Auswerteeinrichtung (28), mit welcher die Detektionsvorrichtung (12) gesteuert werden kann und mit der Detektionsvorrichtung (12) erfasste Informationen über den Überwachungsbereich (14) ausgewertet werden können,
- wobei die Steuer- und Auswerteeinrichtung (28) zumindest signaltechnisch mit der wenigstens einen Empfangseinrichtung (24a, 24b) und der wenigstens einen Sendeeinrichtung (22) verbunden ist,
- wobei die Steuer- und Auswerteeinrichtung (28) wenigstens ein Startsignalerzeugungsmittel (48a, 48b) aufweist zur Erzeugung von Empfangsstartsignalen (58a, 58b) für wenigstens eine Empfangseinrichtung (24a, 24b),
- wobei wenigstens eine Empfangseinrichtung (24a, 24b) wenigstens ein Triggersignalerzeugungsmittel (42) aufweist zur Erzeugung von Triggersignalen (44a, 44b),
- wobei die wenigstens eine Empfangseinrichtung (24a, 24b) wenigstens ein Umwandlungsmittel (38) zur Umwandlung von optischen Reflexions-Überwachungssignalen (36) in Signale, die mit der Steuer- und Auswerteeinrichtung (28) verarbeitet werden können,
- und wobei die wenigstens eine optische Sendeeinrichtung (22) wenigstens eine Lichtquelle (32) aufweist, mit welcher optische Überwachungssignale (34) erzeugt werden können,
**dadurch gekennzeichnet, dass**
- die Detektionsvorrichtung (12) wenigstens zwei Empfangseinrichtungen (24a, 24b) umfasst, welche jeweils ein Triggersignalerzeugungsmittel (42) aufweisen zur Erzeugung eines jeweiligen Triggersignals (44a, 44b),
- die Steuer- und Auswerteeinrichtung (28) wenigstens ein Startsignalerzeugungsmittel (48a, 48b) aufweist zur Erzeugung von Empfangsstartsignalen (58a, 58b) für die Empfangseinrichtungen (24a, 24b),
- die Steuer- und Auswerteeinrichtung (28) wenigstens ein Logikmittel (56) aufweist, mit welchem aus den Triggersignalen (44a, 44b) der wenigstens zwei Empfangseinrichtungen (24a, 24b) ein Sendertriggersignal (64) ermittelt werden kann, welches zumindest bezüglich seiner Triggerfunktion dem Späteren der wenigstens zwei Triggersignale (44a, 44b) entspricht,
- wobei das wenigstens eine Logikmittel (56) wenigstens eine Signalverbindung zu der wenigstens einen Sendeeinrichtung (22) aufweist zur Übermittlung wenigstens des Sendertriggersignals (64) zum Starten der Erzeugung wenigstens eines optischen Überwachungssignals (34).

9. Optoelektronische Detektionsvorrichtung nach Anspruch 8, **dadurch gekennzeichnet, dass** wenigstens eine Empfangseinrichtung (24a, 24b) wenigstens ein Laufzeitmessmittel (46) aufweist.

10. Optoelektronische Detektionsvorrichtung nach Anspruch 8 oder 9, **dadurch gekennzeichnet, dass** die Detektionsvorrichtung (12) wenigstens ein Entfernungskompensationsmittel (52) aufweist.

11. Optoelektronische Detektionsvorrichtung nach einem der Ansprüche 8 bis 10, **dadurch gekennzeichnet, dass** die Detektionsvorrichtung (12) wenigstens ein Verzögerungserfassungsmittel (50a, 50b) aufweist, mit welchem eine Verzögerungsgröße (66) ermittelt werden kann, die eine zeitliche Verzögerung zwischen den Triggersignalen (44a, 44b) der wenigstens zwei Empfangseinrichtungen (24a, 24b) charakterisiert.

12. Optoelektronische Detektionsvorrichtung nach einem der Ansprüche 8 bis 11, **dadurch gekennzeichnet, dass** zwischen einem Ausgang wenigstens einer Empfangseinrichtung (24a, 24b) für das entsprechende Triggersignal (44a, 44b) und einem Eingang eines Entfernungskompensationsmittels (52) wenigstens ein Verzögerungserfassungsmittel (50a, 50b) angeordnet ist.

13. Optoelektronische Detektionsvorrichtung nach einem der Ansprüche 8 bis 12, **dadurch gekennzeichnet, dass** wenigstens ein Logikmittel (56) wenigstens ein UND-Gatter (68, 72), wenigstens eine Laufzeitleitung (74) und/oder wenigstens einen Inverter (72) aufweist.

14. Optoelektronische Detektionsvorrichtung nach einem der Ansprüche 8 bis 13, **dadurch gekennzeichnet, dass** wenigstens Teile der wenigstens einen Steuer- und Auswerteeinrichtung (28), der Signalerzeugungsmittel (48a, 48b), der Entfernungskompensationsmittel (52), der Verzögerungserfassungsmittel (50a, 50b), und/oder der Logikmittel (56) mit wenigstens einem programmierbaren Baustein realisiert sind.

## Claims

1. Method for operating an optoelectronic detection device (12) for monitoring at least one monitoring region (14) with optical monitoring signals (34), wherein
- at least one reception start signal (58a, 58b) is communicated to at least one optical receiving unit (24a, 24b),
- by means of the at least one receiving unit (24a, 24b) in response to the at least one reception start signal (58a, 58b), a reception process is started and at least one trigger signal (44a, 44b) is generated,
- in response to at least one trigger signal (44a, 44b) directly or indirectly by means of at least one optical transmitting unit (22), at least one optical monitoring signal (34) is generated and transmitted into the at least one monitoring region (14),
- reflection monitoring signals (36) originating from monitoring signals (34) reflected in the at least one monitoring region (14) are received by the at least one optical receiving unit (24a, 24b),
**characterized in that**
- at least one first reception start signal (58a) is communicated to at least one first receiving unit (24a) and at least one second reception start signal (58b) is communicated to at least one second receiving unit (24b),
- by means of the at least one first receiving unit (24a) in response to the at least one first reception start signal (58a), a reception process that is carried out by the at least one first receiving unit (24a) is started and at least one first trigger signal (44a) is generated,
- by means of the at least one second receiving unit (24b) in response to the at least one second reception start signal (58b), a reception process that is carried out by the at least one second receiving unit (24b) is started and at least one second trigger signal (44b) is generated,
- a transmitter trigger signal (64) is determined from the at least one first trigger signal (44a) and the at least one second trigger signal (44b), which transmitter trigger signal, at least with regard to its trigger function, corresponds to the later of the at least two trigger signals (44a, 44b),
- in response to the transmitter trigger signal (64), at least one optical monitoring signal (34) is generated by at least one optical transmitting unit (22).

2. Method according to Claim 1, **characterized in that** by means of the reception processes of the receiving units (24a, 24b), time of flight measurements are carried out for at least one optical monitoring signal (34) and at least one corresponding reflection monitoring signal (36) originating from the at least one monitoring signal (34) which was reflected in the monitoring region (14).

3. Method according to Claim 1 or 2, **characterized in that** the at least one first reception start signal (58a) is communicated to the at least one first receiving unit (24a) and the at least one second reception start signal (58a) is communicated to the at least one second receiving unit (24a) simultaneously.

4. Method according to any of the preceding claims, **characterized in that** a time of flight measurement which is carried out by means of a reception process by means of the at least one receiving unit (24a) which generates the temporally earlier trigger signal (44a) is corrected by means of at least one delay variable (66), wherein the at least one delay variable (66) characterizes a temporal delay between the at least one first trigger signal (44a) of the at least one first receiving unit (24a) and the at least one second trigger signal (44b) of the at least one second receiving unit (24b).

5. Method according to any of the preceding claims, **characterized in that** at least one delay variable (66) is determined which characterizes a temporal delay between that state of the at least one first trigger signal (44a) which brings about a trigger function and that state of the at least one second trigger signal (44b) which brings about a trigger function.

6. Method according to any of the preceding claims, **characterized in that**
- at least one delay detecting means (50a, 50b) is started upon the communication of at least one reception start signal (58a, 58b) and is stopped in each case upon the reaching of a state of the at least one second trigger signal (44b) which brings about a trigger function of the at least one first trigger signal (44a) and of a a trigger function,
- from a difference between a delay (60a) for the at least one first trigger signal (44a) and a delay (60b) for the at least one second trigger signal (44b), at least one delay variable (66) is determined which characterizes a temporal delay between the at least one first trigger signal (44a) and the at least one second trigger signal (44b).

7. Method according to any of the preceding claims, **characterized in that** a distance variable (62a, 62b) characterizing a distance of at least one object (18) at which the at least one optical monitoring signal (34) is reflected relative to the optical detection device (12) is determined from at least one result of at least one reception process.

8. Optoelectronic detection device (12) for monitoring at least one monitoring region (14) with optical monitoring signals (34), wherein the detection device (12) has
- at least one optical transmitting unit (22) for generating optical monitoring signals (34),
- at least one optical receiving unit (24a, 24b) for receiving optical reflection monitoring signals (36) originating from optical monitoring signals (34) reflected in the at least one monitoring region (14),
- and at least one electronic control and evaluation unit (28) which can control the detection device (12) and can evaluate information about the monitoring region (14) detected by the detection device (12),
- wherein the control and evaluation unit (28) is connected to the at least one receiving unit (24a, 24b) and the at least one transmitting unit (22) at least in terms of signaling,
- wherein the control and evaluation unit (28) has at least one start signal generating means (48a, 48b) for generating reception start signals (58a, 58b) for at least one receiving unit (24a, 24b),
- wherein at least one receiving unit (24a, 24b) has at least one trigger signal generating means (42) for generating trigger signals (44a, 44b),
- wherein the at least one receiving unit (24a, 24b) has at least one conversion means (38) for converting optical reflection monitoring signals (36) into signals that can be processed by the control and evaluation unit (28),
- and wherein the at least one optical transmitting unit (22) has at least one light source (32) which can generate optical monitoring signals (34),
**characterized in that**
- the detection device (12) comprises at least two receiving units (24a, 24b) each having a trigger signal generating means (42) for generating a respective trigger signal (44a, 44b),
- the control and evaluation unit (28) has at least one start signal generating means (48a, 48b) for generating reception start signals (58a, 58b) for the receiving units (24a, 24b),
- the control and evaluation unit (28) has at least one logic means (56) which can determine a transmitter trigger signal (64) from the trigger signals (44a, 44b) of the at least two receiving units (24a, 24b), which transmitter trigger signal, at least with regard to its trigger function, corresponds to the later of the at least two trigger signals (44a, 44b),
- wherein the at least one logic means (56) has at least one signal connection to the at least one transmitting unit (22) for communicating at least the transmitter trigger signal (64) for starting the generation of at least one optical monitoring signal (34).

9. Optoelectronic detection device according to Claim 8, **characterized in that** at least one receiving unit (24a, 24b) has at least one time of flight measuring means (46).

10. Optoelectronic detection device according to Claim 8 or 9, **characterized in that** the detection device (12) has at least one distance compensation means (52).

11. Optoelectronic detection device according to any of Claims 8 to 10, **characterized in that** the detection device (12) has at least one delay detecting means (50a, 50b) which can determine a delay variable (66) characterizing a temporal delay between the trigger signals (44a, 44b) of the at least two receiving units (24a, 24b).

12. Optoelectronic detection device according to any of Claims 8 to 11, **characterized in that** at least one delay detecting means (50a, 50b) is arranged between an output of at least one receiving unit (24a, 24b) for the corresponding trigger signal (44a, 44b) and an input of a distance compensation means (52).

13. Optoelectronic detection device according to any of Claims 8 to 12, **characterized in that** at least one logic means (56) has at least one AND gate (68, 72), at least one delay line (74) and/or at least one inverter (72).

14. Optoelectronic detection device according to any of Claims 8 to 13, **characterized in that** at least parts of the at least one control and evaluation unit (28), of the signal generating means (48a, 48b), of the distance compensation means (52), of the delay detecting means (50a, 50b), and/or of the logic means (56) are realized by at least one programmable component.

## Revendications

1. Procédé de fonctionnement d'un dispositif de détection optoélectronique (12) destiné à surveiller au moins une zone de surveillance (14) à l'aide de signaux de surveillance optiques (34), procédé dans lequel
- au moins un signal de début de réception (58a, 58b) est transmis à au moins un module de réception optique (24a, 24b),
- un processus de réception est démarré à l'aide de l'au moins un module de réception (24a, 24b) en réponse à l'au moins un signal de début de réception (58a, 58b) et au moins un signal de déclenchement (44a, 44b) est généré,
- en réponse à au moins un signal de déclenchement (44a, 44b), au moins un signal de surveillance optique (34) est généré directement ou indirectement à l'aide d'au moins un module de d'émission optique (22) et est transmis dans l'au moins une zone de surveillance (14),
- à l'aide de l'au moins un module de réception optique (24a, 24b), des signaux de surveillance de réflexion (36) sont reçus qui proviennent de signaux de surveillance (34) qui sont réfléchis dans l'au moins une zone de surveillance (14),
**caractérisé en ce que**
- au moins un premier signal de début de réception (58a) est transmis à au moins un premier module de réception (24a) et au moins un deuxième signal de début de réception (58b) est transmis à au moins un deuxième module de réception (24b),
- à l'aide de l'au moins un premier module de réception (24a), un processus de réception, qui est exécuté à l'aide de l'au moins un premier module de réception (24a), est lancé en réponse à l'au moins un premier signal de début de réception (58a) et au moins un premier signal de déclenchement (44a) est généré,
- à l'aide de l'au moins un deuxième module de réception (24b), un processus de réception, qui est exécuté à l'aide de l'au moins un deuxième module de réception (24b), est lancé en réponse à l'au moins un deuxième signal de début de réception (58b) et au moins un deuxième signal de déclenchement (44b) est généré,
- un signal de déclenchement d'émetteur (64) est déterminé à partir de l'au moins un premier signal de déclenchement (44a) et de l'au moins un deuxième signal de déclenchement (44b), lequel signal de déclenchement d'émetteur correspond au dernier des au moins deux signaux de déclenchement (44a, 44b) au moins en ce qui concerne sa fonction de déclenchement,
- au moins un signal de surveillance optique (34) est généré en réponse au signal de déclenchement d'émetteur (64) à l'aide d'au moins un module d'émission optique (22).

2. Procédé selon la revendication 1, **caractérisé en ce que** les processus de réception des modules de réception (24a, 24b) sont utilisés pour effectuer des mesures de temps de propagation pour au moins un signal de surveillance optique (34) et au moins un signal de surveillance de réflexions correspondant (36) qui provient de l'au moins un signal de surveillance (34) qui a été réfléchi dans la zone de surveillance (14).

3. Procédé selon la revendication 1 ou 2, **caractérisé en ce que** l'au moins un premier signal de début de réception (58a) est transmis à l'au moins un premier module de réception (24a) et l'au moins un deuxième signal de début de réception (58a) est transmis en même temps à l'au moins un deuxième module de réception (24a) .

4. Procédé selon l'une des revendications précédentes, **caractérisé en ce qu'**une mesure de temps de propagation, qui est effectuée avec un processus de réception à l'aide de l'au moins un module de réception (24a) à partir duquel le signal de déclenchement antérieur (44a) est généré, est corrigée au moyen d'au moins une grandeur de retard (66), l'au moins une grandeur de retard (66) caractérisant un retard entre l'au moins un premier signal de déclenchement (44a) de l'au moins un premier module de réception (24a) et l'au moins un deuxième signal de déclenchement (44b) de l'au moins un deuxième module de réception (24b).

5. Procédé selon l'une des revendications précédentes, **caractérisé en ce qu'**au moins une grandeur de retard (66) est déterminée qui caractérise un retard entre l'état de l'au moins un premier signal de déclenchement (44a) provoquant une fonction de déclenchement et l'état de l'au moins un deuxième signal de déclenchement (44b) provoquant une fonction de déclenchement.

6. Procédé selon l'une des revendications précédentes, **caractérisé en ce que**
- au moins un moyen de détection de retard (50a, 50b) est démarré lors de la transmission d'au moins un signal de début de réception (58a, 58b) et est arrêté lorsqu'un état de l'au moins un deuxième signal de déclenchement (44b) provoquant une fonction de déclenchement de l'au moins un premier signal de déclenchement (44a) et d'une une fonction de déclenchement sont atteints,
- au moins une grandeur de retard (66) est déterminée à partir d'une différence entre un retard (60a) pour l'au moins un premier signal de déclenchement (44a) et un retard (60b) pour l'au moins un deuxième signal de déclenchement (44b), laquelle grandeur de retard caractérise un retard entre l'au moins un premier signal de déclenchement (44a) et l'au moins un deuxième signal de déclenchement (44b).

7. Procédé selon l'une des revendications précédentes, **caractérisé en ce qu'**une grandeur de distance (62a, 62b), qui caractérise une distance d'au moins un objet (18), sur lequel l'au moins un signal de surveillance optique (34) est réfléchi, par rapport au dispositif de détection optique (12), est déterminée à partir d'au moins un résultat d'au moins un processus de réception.

8. Dispositif de détection optoélectronique (12) destiné à surveiller au moins une zone de surveillance (14) à l'aide de signaux de surveillance optiques (34), le dispositif de détection (12) comportant
- au moins un module d'émission optique (22) destiné à générer des signaux de surveillance optiques (34),
- au moins un module de réception optique (24a, 24b) destiné à recevoir des signaux de surveillance de réflexions optiques (36) qui proviennent de signaux de surveillance optiques (34) qui sont réfléchis dans l'au moins une zone de surveillance (14),
- et au moins un module de commande et d'évaluation électronique (28) permettant de commander le dispositif de détection (12) et d'évaluer des informations sur la zone de surveillance (14) acquises avec le dispositif de détection (12),
- le module de commande et d'évaluation (28) étant relié au moins en termes de signaux à l'au moins un module de réception (24a, 24b) et à l'au moins un module d'émission (22),
- le module de commande et d'évaluation (28) comportant au moins un moyen de génération de signal de début (48a, 48b) destiné à générer des signaux de début de réception (58a, 58b) pour au moins un module de réception (24a, 24b),
- au moins un module de réception (24a, 24b) comportant au moins un moyen de génération de signal de déclenchement (42) destiné à générer des signaux de déclenchement (44a, 44b),
- l'au moins un module de réception (24a, 24b) comportant au moins un moyen de conversion (38) destiné à convertir des signaux de surveillance de réflexions optiques (36) en signaux qui peuvent être traités avec le module de commande et d'évaluation (28),
- et l'au moins un module d'émission optique (22) comportant au moins une source de lumière (32) permettant de générer des signaux de surveillance optiques (34),
**caractérisé en ce que**
- le dispositif de détection (12) comprend au moins deux modules de réception (24a, 24b) qui comportent chacun un moyen de génération de signal de déclenchement (42) destiné à générer un signal de déclenchement respectif (44a, 44b),
- le module de commande et d'évaluation (28) comporte au moins un moyen de génération de signal de début (48a, 48b) destiné à générer des signaux de début de réception (58a, 58b) pour les modules de réception (24a, 24b),
- le module de commande et d'évaluation (28) comporte au moyen logique (56) permettant de déterminer, à partir des signaux de déclenchement (44a, 44b) des au moins deux modules de réception (24a, 24b), un signal de déclenchement d'émetteur (64) qui correspond au dernier des au moins deux signaux de déclenchement (44a, 44b) au moins en ce qui concerne sa fonction de déclenchement,
- l'au moins un moyen logique (56) comportant au moins une liaison de signal à l'au moins un module d'émission (22) pour transmettre au moins le signal de déclenchement d'émetteur (64) destiné à démarrer la génération d'au moins un signal de surveillance optique (34) .

9. Dispositif de détection optoélectronique selon la revendication 8, **caractérisé en ce qu'**au moins un module de réception (24a, 24b) comporte au moins un moyen de mesure de temps de propagation (46).

10. Dispositif de détection optoélectronique selon la revendication 8 ou 9, **caractérisé en ce que** le dispositif de détection (12) comporte au moins un moyen de compensation de distance (52).

11. Dispositif de détection optoélectronique selon l'une des revendications 8 à 10, **caractérisé en ce que** le dispositif de détection (12) comporte au moins un moyen de détection de retard (50a, 50b) permettant de déterminer une grandeur de retard (66) qui caractérise un retard entre les signaux de déclenchement (44a, 44b) des au moins deux modules de réception (24a, 24b).

12. Dispositif de détection optoélectronique selon l'une des revendications 8 à 11, **caractérisé en ce qu'**au moins un moyen de détection de retard (50a, 50b) est disposé entre une sortie d'au moins un module de réception (24a, 24b) pour le signal de déclenchement correspondant (44a, 44b) et une entrée d'un moyen de compensation de distance (52).

13. Dispositif de détection optoélectronique selon l'une des revendications 8 à 12, **caractérisé en ce qu'**au moins un moyen logique (56) comporte au moins une porte ET (68, 72), au moins une ligne à retard (74) et/ou au moins un inverseur (72).

14. Dispositif de détection optoélectronique selon l'une des revendications 8 à 13, **caractérisé en ce qu'**au moins des parties de l'au moins un module de commande et d'évaluation (28), des moyens de génération de signal (48a, 48b), des moyens de compensation de distance (52), des moyens de détection de retard (50a, 50b), et/ou des moyens logiques (56) sont réalisées avec au moins un composant programmable.
